# EUROPÄISCHE PATENTANMELDUNG

(11) **EP 2 875 942 A1**
(43) Veröffentlichungstag der Anmeldung: **27.05.2015**
(21) Anmeldenummer: 14193861.3
(22) Anmeldetag: 19.11.2014
(51) Int. Cl.: B30B 9/12, B30B 9/18, B01D 29/11, C02F 11/12

(54) **Vorrichtung und Verfahren zum Eindicken von flüssigem feststoffhaltigem Substrat**

(30) Priorität: 21.11.2013 DE 102013112878
(71) Anmelder: Börger GmbH, 46325 Borken-Weseke (DE)
(72) Erfinder: Börger, Alois, 46325 Borken-Wekese (DE)
(74) Vertreter: Linnemann, Winfried

(57) **Zusammenfassung**

Die Erfindung betrifft eine Vorrichtung (1) zum Eindicken von flüssigem feststoffhaltigem Substrat, mit wenigstens einem flüssigkeitsdurchlässigen, Feststoff zurückhaltenden Filterrohr (20) und mit einer im Filterrohr (20) rotierbaren Förderschnecke (20'), mit einem in das Filterrohr (20) führenden Substrateinlass (11), mit einem außen vom Filterrohr (20) ausgehenden Flüssigkeitsauslass (12, 13) und mit einem Feststoffauslass (14), wobei auf einer inneren Oberfläche des Filterrohrs (20) Feststoff aus dem eingetragenen Substrat abscheidbar ist und wobei mittels der Förderschnecke (20') Feststoff zum Bilden eines Feststoffpfropfens in einen zwischen dem Filterrohr (20) und dem Feststoffauslass (14) angeordneten Presskanal (3) drückbar und aus dem Presskanal (3) durch den Feststoffauslass (14) austragbar ist.

Die Vorrichtung (1) gemäß Erfindung ist dadurch gekennzeichnet, dass die Förderschnecke (20') einen Außendurchmesser aufweist, der um ein das Ausbilden eines teppichartigen, einen Feinfilter bildenden Feststoffbelags (15) auf dem Innenumfang des Filterrohrs (20) erlaubendes Maß kleiner ist als der Innendurchmesser des Filterrohrs (20).

Weiter betrifft die Erfindung ein Verfahren zum Eindicken von flüssigem feststoffhaltigem Substrat, insbesondere zum Betreiben einer Vorrichtung (1) der vorstehend angegebenen Art.

## Beschreibung

Die Erfindung betrifft eine Vorrichtung zum Eindicken von flüssigem feststoffhaltigem Substrat, mit wenigstens einem flüssigkeitsdurchlässigen, Feststoff zurückhaltenden Filterrohr und mit einer im Filterrohr rotierbaren Förderschnecke, mit einem in das Filterrohr führenden Substrateinlass, mit einem außen vom Filterrohr ausgehenden Flüssigkeitsauslass und mit einem Feststoffauslass, wobei auf einer inneren Oberfläche des Filterrohrs Feststoff aus dem eingetragenen Substrat abscheidbar ist und wobei mittels der Förderschnecke Feststoff zum Bilden eines Feststoffpfropfens in einen zwischen dem Filterrohr und dem Feststoffauslass angeordneten Presskanal drückbar und aus dem Presskanal durch den Feststoffauslass austragbar ist.

Außerdem betrifft die Erfindung ein Verfahren zum Eindicken von flüssigem feststoffhaltigem Substrat, insbesondere zum Betreiben einer Vorrichtung der vorstehend genannten Art.

Eine Vorrichtung der eingangs genannten Art in Form eines Flüssigkeitsabscheiders ist aus der DE 10 2010 031 072 A1 bekannt. Hier wird das einzudickende, in seine flüssige und feste Fraktion zu trennende Substrat mittels einer Pumpe aus einem Vorratsbehälter dem Flüssigkeitsabscheider zugeführt. Innerhalb des Flüssigkeitsabscheiders, der im Wesentlichen aus einem Filterrohr mit schlitzartigen Ausnehmungen besteht, erfolgt eine Flüssigkeitsabscheidung. Für den nötigen Differenzdruck sorgen hier die Pumpe, welche das Substrat in den Flüssigkeitsabscheider fördert, und ein drehantreibbares Räumelement im Filterrohr. Weiterhin ist der Flüssigkeitsabscheider mit einem Presskanal ausgestattet, in den hinein die vom Räumelement geförderten Feststoffe gefördert werden, um dort zu einem ringförmigen Pfropfen oder Presskuchen zusammengepresst zu werden. Ein Mundstück oder Auswurfbereich des Presskanals ist mit einer Klappe verschlossen, die mit dem Räumelement mitrotiert. Um die Klappe normalerweise im geschlossenen Zustand zu halten, ist sie mit einer Feder druckbeaufschlagt. Durch einen im Betrieb des Flüssigkeitsabscheiders erfolgenden stetigen Aufbau des Pfropfens drückt dieser von innen gegen die Klappe und verschiebt diese gegen die Federkraft nach außen. Dadurch bildet sich ein Ringspalt zwischen Klappe und Presskanal. Durch diesen Ringspalt kann der Feststoffpfropfen ausgefördert werden.

Als nachteilig wird bei diesem bekannten Flüssigkeitsabscheider angesehen, dass der Pfropfen im Presskanal unter dem von der Pumpe erzeugten Druck des Substrats steht. Dies macht es erforderlich, einen sehr stabilen Pfropfen zu erzeugen, um einen unerwünschten Durchbruch von unter Druck stehendem Substrat durch den Feststoffauslass zu verhindern. Für die Erzeugung eines solchen stabilen Pfropfens muss eine hohe Antriebsleistung für das Räumelement zur Verfügung gestellt werden und das Räumelement selbst muss ebenfalls entsprechend stabil ausgeführt sein. Dies führt zu erhöhten Kosten bei der Fertigung des Abscheiders und in dessen Betrieb.

Für die vorliegende Erfindung stellt sich daher die Aufgabe, eine Vorrichtung und ein Verfahren der eingangs genannten Art anzugeben, mit denen die genannten Nachteile vermieden werden und mit denen insbesondere bei verminderter Antriebsleistung und mit einer leichteren Bauweise flüssige feststoffhaltige Substrate wirksam eingedickt, d.h. in ihre feste und flüssige Fraktion getrennt, werden können, wobei auch feine bis feinste Feststoffe mit der festen Fraktion abgetrennt und aus der flüssigen Fraktion herausgehalten werden sollen.

Die Lösung des die Vorrichtung betreffenden Teils der Aufgabe gelingt erfindungsgemäß mit einer Vorrichtung der eingangs genannten Art, die dadurch gekennzeichnet ist, dass die Förderschnecke einen Außendurchmesser aufweist, der um ein das Ausbilden eines teppichartigen, einen Feinfilter bildenden Feststoffbelags auf dem Innenumfang des Filterrohrs erlaubendes Maß kleiner ist als der Innendurchmesser des Filterrohrs.

Da die Schnecke einen Außendurchmesser hat, der kleiner als der Innendurchmesser des Filterrohrs ist, kann die Förderschnecke die Innenumfangsfläche des Filterrohrs nicht mehr erreichen, wodurch sich im Betrieb der Vorrichtung infolge der Flüssigkeitsströmung radial von innen nach außen durch das Filterrohr zwangsläufig ein Feststoffbelag auf der Innenumfangsfläche des Filterrohrs aus dem im Substrat enthaltenen Feststoff bildet. Dieser Belag dient im Betrieb der Vorrichtung als gewollter Filterbelag, der einen Filterkörper bildet, welcher insbesondere feine und feinste Feststoffteilchen aus dem Substrat zurückhält, die vom Filterrohr allein nicht zurückgehalten würden. Vorteilhaft sammelt sich so z.B. bei einem Einsatz der Vorrichtung zum Eindicken von Gülle aus Ställen oder Gärresten aus Biogasanlagen ein erheblicher Anteil an in der anfallenden flüssigen Phase unerwünschten Nährstoffen, insbesondere Phosphor bzw. Phosphate sowie Nitrate, in dem Filterbelag. Die Förderschnecke trägt überschüssigen Belag ab, belässt aber immer eine gewünschte Belagschichtdicke auf dem Filterrohrinnenumfang. Den abgetragenen, gesättigten Feststoff des überschüssigen Belages transportiert die Förderschnecke in Richtung zum Feststoffauslass in den zugeordneten Presskanal. Die flüssige Phase, die nur noch einen wesentlich verminderten Gehalt an Nährstoffen aufweist, darf dann für Bewässerungszwecke verwendet oder in einen Vorfluter eingeleitet werden, ohne unzulässige Nährstoffbelastungen zu verursachen. Der in der Vorrichtung abgetrennte Feststoff mit den darin enthaltenen Nährstoffen stellt einen transport- und lagerfähigen Dünger dar, der zu Zeiten und an Orten, wann bzw. wo Düngebedarf besteht, auf landwirtschaftlichen Flächen ausgebracht werden kann.

Bevorzugt ist der Außendurchmesser der Förderschnecke um 0,5 bis 5 mm, vorzugsweise um 1 bis 3 mm, kleiner als der Innendurchmesser des Filterrohrs. Mit den angegebenen Maßen wird in der Praxis in den meisten Fällen erreicht, dass sich ein wirksamer Filterbelag aus dem Feststoff auf dem Filterohrinnenumfang bildet. Tendenziell wird bei kleinen Feststoffteilchengrößen ein geringerer Abstand zwischen Förderschneckenaußenumfang und Filterrohrinnenumfang gewählt, während bei größeren Feststoffteilchengrößen ein größerer Abstand zwischen Förderschneckenaußenumfang und Filterrohrinnenumfang gewählt. Das passende Maß für diesen Abstand wird zweckmäßig durch Versuche ermittelt, da die in der erfindungsgemäßen Vorrichtung einzudickenden, in feste und flüssige Phase zu trennenden Substrate häufig Naturprodukte, wie die erwähnte Gülle oder die erwähnten Gärreste, sind, bei denen die Art und Eigenschaften, insbesondere die Teilchengröße oder das Teilchengrößenspektrum des Feststoffs, unterschiedlich sind. Daher kann sich in der Praxis ergeben, dass das optimale Maß des Abstandes auch außerhalb des eingangs angegebenen Bereichs liegt.

Um für eine geeignete und günstige Teilchengröße oder Teilchengrößeverteilung des Feststoffs im Substrat vor dessen Einleitung in die Vorrichtung zu sorgen, kann der Vorrichtung bei Bedarf ein Zerkleinerer oder Zerhacker vorgeschaltet sein.

In weiterer Ausgestaltung der erfindungsgemäßen Vorrichtung wird vorgeschlagen, dass an den Flüssigkeitsauslass der Vorrichtung eine Vakuumquelle angeschlossen oder anschließbar ist, mittels welcher zwischen dem Inneren des Filterrohrs und dem Äußeren des Filterrohrs eine Druckdifferenz mit von innen nach außen abfallendem Druck erzeugbar ist. Durch die Vakuumquelle wird der für den Filtriervorgang durch das Filterrohr nötige Differenzdruck zur Verfügung gestellt, was eine wirksame Flüssigkeitsabscheidung am Filterrohr gewährleistet. Der Feststoffpfropfen im Presskanal sorgt dafür, dass am Feststoffauslass eine luft- und flüssigkeitsdichte Sperre entsteht, wobei aber ein Feststoffaustrag möglich bleibt.

Zusätzlich ist zweckmäßig mittels der Vakuumquelle im Filterrohr ein Vakuum gegenüber der Umgebung erzeugbar. Vorteilhaft kann also bei der erfindungsgemä-ßen Vorrichtung das Druckniveau im Inneren der Vorrichtung relativ zur Umgebung abgesenkt werden, sodass der Feststoffpfropfen im Presskanal nur noch einem verminderten Substratdruck oder sogar keinem Substratdruck mehr ausgesetzt ist. Der Pfropfen kann daher mit verminderter Antriebsleistung der Förderschnecke und mit einer weniger stabilen Förderschnecke erzeugt werden, ohne dass die Gefahr eines unerwünschten Durchbruchs von Substrat durch den Feststoffauslass entsteht. Dieses Vakuum kann vorteilhaft auch dazu genutzt werden, ohne weitere Fördermittel das Substrat in die Vorrichtung zu fördern.

Im Betrieb der Vorrichtung unterstützt die mittels der Vakuumquelle erzeugte Druckdifferenz den Aufbau des teppichartigen Belages aus Feststoff aus dem Substrat auf dem Innenumfang des Filterrohrs. Dieser teppichartige Belag dient, wie schon erwähnt, dann als gewollter Fein- oder Feinstfilter und feine Teile aus dem Substrat, wie bei z. B. Gülle wünschenswerterweise abzufilternde Nährstoffe, beispielsweise Phosphor, setzen sich in dem aufgebauten teppichartigen Belag ab. Die drehantreibbare Förderschnecke trägt einen überschüssigen, radial inneren Teil des Belages immer wieder ab und fördert den gesättigten Feststoff in Richtung Presskanal und Feststoffauslass.

Um das gewünschte Vakuum mit geringer Leistung der Vakuumquelle erzeugen zu können, wird vorgeschlagen, dass dem Substrateinlass eine Drossel zugeordnet oder vorgeschaltet ist.

Weiter ist für die erfindungsgemäße Vorrichtung vorgesehen, dass das Filterrohr radial außen mit Abstand von einem dichten Mantel umgeben ist, dass zwischen dem Filterrohr und dem Mantel ein Flüssigkeitsraum gebildet ist und dass der Mantel in seinem im Betrieb der Vorrichtung untersten Bereich den Flüssigkeitsauslass aufweist. Hiermit wird bei einfacher Bauweise ein unerwünschter und störender Luftzutritt in die Vorrichtung verhindert.

Damit die in der Vorrichtung aus dem Substrat abgeschiedene Flüssigkeit zwecks Entsorgung oder Weiterverarbeitung gezielt abgeführt werden kann, weist zweckmäßig der Mantel in seinem im Betrieb der Vorrichtung untersten Bereich einen Sammeltrichter auf, dessen tiefste Stelle den Flüssigkeitsauslass bildet. Hieran kann dann eine weiterführende Leitung angeschlossen sein oder es kann hier ein Sammel- oder Transportbehälter angeordnet werden.

Insbesondere aus Gründen einer zuverlässigen Funktion ist bevorzugt die Vakuumquelle eine Flüssigkeitspumpe, deren Saugseite mit dem Flüssigkeitsauslass verbunden oder verbindbar ist. Die Flüssigkeitspumpe sorgt dabei zugleich für das gewünschte Vakuum und für die Abführung der aus dem Substrat abgeschiedenen Flüssigkeit. Gut geeignet ist hierfür beispielsweise eine Drehkolbenpumpe.

Eine für die Montage und Demontage der Vorrichtung sowie für deren Betrieb günstige Anordnung ergibt sich dadurch, dass bevorzugt an den Flüssigkeitsauslass eine die Flüssigkeit abführende Flüssigkeitsabführleitung angeschlossen ist und dass die als Vakuumquelle dienende Flüssigkeitspumpe in die Flüssigkeitsabführleitung eingefügt ist.

Die weiter oben erwähnte Drossel ist bevorzugt durch eine feste oder veränderbare Querschnittsverengung des Substrateinlasses oder durch eine feste oder veränderbare Querschnittsverengung einer dem Substrateinlass vorgeschalteten Substratzuführleitung gebildet. Eine feste Querschnittsverengung kann beispielsweise einfach durch eine starre Blende gebildet sein. Eine veränderbare Querschnittsverengung kann z. B. durch ein verstellbares Ventil gebildet sein.

Alternativ kann die Drossel durch eine im Substrateinlass oder in einer diesem vorgeschalteten Substratzuführleitung angeordnete Fördereinrichtung gebildet sein, deren Leistung im Verhältnis zu der Leistung der Vakuumquelle so steuerbar ist, dass zwischen dem Inneren des Filterrohrs und dem Äußeren des Filterrohrs die Druckdifferenz in einer gewünschten Größe entsteht.

Weiter ist für die erfindungsgemäße Vorrichtung bevorzugt vorgesehen, dass die Förderschnecke eine Schneckenwelle aufweist, die am einlassseitigen Ende der Förderschnecke dichtend aus dem Filterrohr herausgeführt und mit einem drehzahlvariablen motorischen Drehantrieb verbunden ist. Die Förderschnecke ist auf diese Weise vorteilhaft mit einer variablen, für den jeweiligen Einsatzfall optimierbaren Drehzahl antreibbar. Der Drehantrieb ist so außerdem für Wartungs- oder Reparaturzwecke gut zugänglich.

Um die Sicherheit gegen einen unerwünschten Durchtritt oder Durchbruch von flüssigem Substrat durch den Feststoffauslass zu erhöhen, ist vorgesehen, dass der Feststoffauslass mittels eines bewegbaren Verschlusses verschließbar und zum Austrag von Feststoff freigebbar ist.

Bevorzugt der Verschluss am Feststoffauslass durch eine axial zwischen einer Schließstellung und einer Öffnungsstellung verschiebbar gelagerte, mit einer in Schließrichtung wirkenden Kraft vorbelastete Verschlussscheibe gebildet. In ihrer Schließstellung schließt die Verschlussscheibe selbsttätig den Feststoffauslass ab. Zum Austragen von Feststoff öffnet die Verschlussscheibe infolge der vom Feststoff auf sie in Öffnungsrichtung ausgeübten, die Schließkraft übersteigenden Kraft ebenfalls selbsttätig.

Zweckmäßig ist dabei der Verschluss mittels mechanischer Kopplung mit der Förderschnecke oder mittels eines eigenen Drehantriebes drehantreibbar, um eine für den Feststoffaustrag günstige Relativbewegung zwischen Feststoff und Verschlussscheibe zu erzeugen.

Um den Feststoff möglichst kleinteilig auszugeben, was für dessen weitere Verwendung in der Regel vorteilhaft ist, ist bevorzugt vorgesehen, dass der Verschluss an seiner dem Feststoffauslass zugewandten Seite mindestens ein Schneid- und/oder Schabewerkzeug zum Lösen und Zerkleinern von durch den Feststoffauslass aus dem Feststoffpfropfen ausgetragenem Feststoff aufweist.

Alternativ kann der Verschluss am Feststoffauslass durch eine Drehkolbenpumpe gebildet sein. Diese Ausgestaltung ist insbesondere dann sinnvoll, wenn das durch den Feststoffauslass ausgebrachte Material noch fließfähig und durch die Drehkolbenpumpe förderbar ist, beispielsweise eine dickflüssige oder schlammige oder breiige Konsistenz aufweist.

Weiter schlägt die Erfindung vor, dass der Presskanal im Inneren eines eine Fortsetzung des Filterrohrs bildenden, umfangsseitig geschlossenen oder siebartig ausgebildeten Rohrabschnitts ausgebildet ist. Bei einem siebartigen Rohrabschnitt kann vorteilhaft auch der Presskanal noch für eine Flüssigkeitsabscheidung genutzt werden, wenn ein besonders hoher Trennungsgrad gewünscht ist.

Eine diesbezügliche weitere Ausgestaltung sieht vor, dass der Rohrabschnitt bei einer Ausbildung als Siebrohr von einem eigenen, zweiten Mantel dicht umgeben ist und einen eigenen, zweiten Flüssigkeitsauslass aufweist. Hierdurch kann bei Bedarf die im Presskanal abgeschiedene Flüssigkeit für sich abgeführt und verwendet werden. Es können aber auch die beiden Auslässe zusammengeführt werden, um dann alle Flüssigkeit gemeinsam abzuleiten.

Die Lösung des zweiten, das Verfahren betreffenden Teils der Aufgabe gelingt erfindungsgemäß mit einem Verfahren zum Eindicken von flüssigem feststoffhaltigem Substrat, insbesondere zum Betreiben einer Vorrichtung nach einem der vorhergehenden Ansprüche, wobei das Substrat in wenigstens ein flüssigkeitsdurchlässiges, Feststoff zurückhaltendes Filterrohr mit einer im Filterrohr rotierbaren Förderschnecke geführt wird, wobei auf einer inneren Oberfläche des Filterrohrs Feststoff aus dem eingetragenen Substrat abgeschieden wird und wobei mittels der Förderschnecke Feststoff zum Bilden eines Feststoffpfropfens in einen zwischen dem Filterrohr und einem Feststoffauslass angeordneten Presskanal gedrückt und aus dem Presskanal durch den Feststoffauslass ausgetragen wird, welches dadurch gekennzeichnet ist, dass auf dem Innenumfang des Filterrohrs ein teppichartiger, einen hohlzylindrischen Feinfilter bildender Feststoffbelag erzeugt wird, indem eine Förderschnecke mit einem Außendurchmesser eingesetzt wird, der um ein das Ausbilden des teppichartigen Feststoffbelags erlaubendes Maß kleiner ist als der Innendurchmesser des Filterrohrs.

In Abkehr von üblichen Verfahrensweisen, bei denen angestrebt wird, den Innenumfang des Filterohr immer möglichst sauber und frei von Feststoff zu halten, wird hier erfindungsgemäß ganz gezielt und gewollt ein ständiger Feststoffbelag auf dem Innenumfang des Filterohrs erzeugt. Damit wird ein Fein- oder Feinstfilter gebildet, welcher verfahrensmäßig dem Filterohr vorgeschaltet ist und der fein- und feinstteilige Feststoffteilchen aus dem Substrat zu filtern vermag, die durch das Filterrohr allein nicht abscheidbar wären. Somit werden mit dem erfindungsgemäßen Verfahren die oben im Zusammenhang mit der erfindungsgemäßen Vorrichtung schon erläuterten Vorteile erreicht.

Bevorzugt wird der teppichartige Feststoffbelag auf dem Innenumfang des Filterrohrs mit einer Schichtdicke von 0,5 bis 5 mm, vorzugsweise von 1 bis 3 mm, erzeugt, was in den meisten praktischen Anwendungen gute Ergebnisse liefert. Bei Bedarf sind auch kleinere oder größere Schichtdicken des Feststoffbelags möglich.

Ergänzend kann mittels einer an den Flüssigkeitsauslass angeschlossenen oder anschließbaren Vakuumquelle zwischen dem Inneren des Filterrohrs und dem Äußeren des Filterrohrs eine Druckdifferenz mit von innen nach außen abfallendem Druck erzeugt werden, um das Aufbauen des Feststoffbelags auf dem Filterrohrinnenumfang und das Abtrennen der flüssigen Phase aus dem Substrat durch den Feststoffbelag und das Filterrohr hindurch zu unterstützen.

Weiterhin wird bevorzugt mittels der Vakuumquelle im Filterrohr ein Vakuum gegenüber der Umgebung erzeugt, was den Feststoffpfropfen im Presskanal entlastet und die Gefahr eines Durchbruchs von Substrat aus dem Filterrohr durch den Feststoffauslass vermindert.

Um das Vakuum mit geringem Energieaufwand gezielt und reproduzierbar erzeugen zu können, wird zweckmäßig im oder vor dem Substrateinlass die Substratströmung gedrosselt.

Weiter ist für das Verfahren bevorzugt vorgesehen, dass der Differenzdruck mittels einer als Vakuumquelle dienenden Flüssigkeitspumpe erzeugt wird, deren Saugseite mit dem Flüssigkeitsauslass verbunden oder verbindbar ist.

Um den Aufwand gering zu halten, wird vorzugsweise das Substrat mittels des im Filterrohr von der Vakuumquelle gegenüber der Umgebung erzeugten Vakuums durch den Substrateinlass in das Filterrohr gefördert.

Alternativ sieht das Verfahren vor, dass das Substrat dem Substrateinlass mittels einer diesem vorgeschalteten Fördereinrichtung zugeführt wird und dass die Fördereinrichtung und die Vakuumquelle so aufeinander abgestimmt werden, dass im Betrieb der Vorrichtung zwischen dem Inneren des Filterrohrs und dem Äußeren des Filterrohrs der Differenzdruck in einer gewünschten Größe erzeugt wird.

Im Folgenden wird ein Ausführungsbeispiel der Erfindung anhand einer Zeichnung erläutert. Die Figuren der Zeichnung zeigen:
- Figur 1: eine Vorrichtung zum Eindicken von flüssigem feststoffhaltigem Substrat, mit Zu- und Abführleitungen, einer Pumpe und einer Steuerung, in Ansicht,
- Figur 2: die Vorrichtung aus Figur 1 in einer teilweise aufgeschnittenen Darstellung,
- Figur 3: den in Figur 2 linken Endbereich der Vorrichtung mit deren Feststoffauslass, im Längsschnitt, und
- Figur 4: einen Abschnitt der Förderschnecke und des diese umgebenden Filterrohrs, im Längsschnitt.

In den verschiedenen Zeichnungsfiguren sind gleiche Teile stets mit den gleichen Bezugsziffern versehen, sodass nicht zu allen Figuren jeweils alle Bezugszeichen erläutert werden müssen.

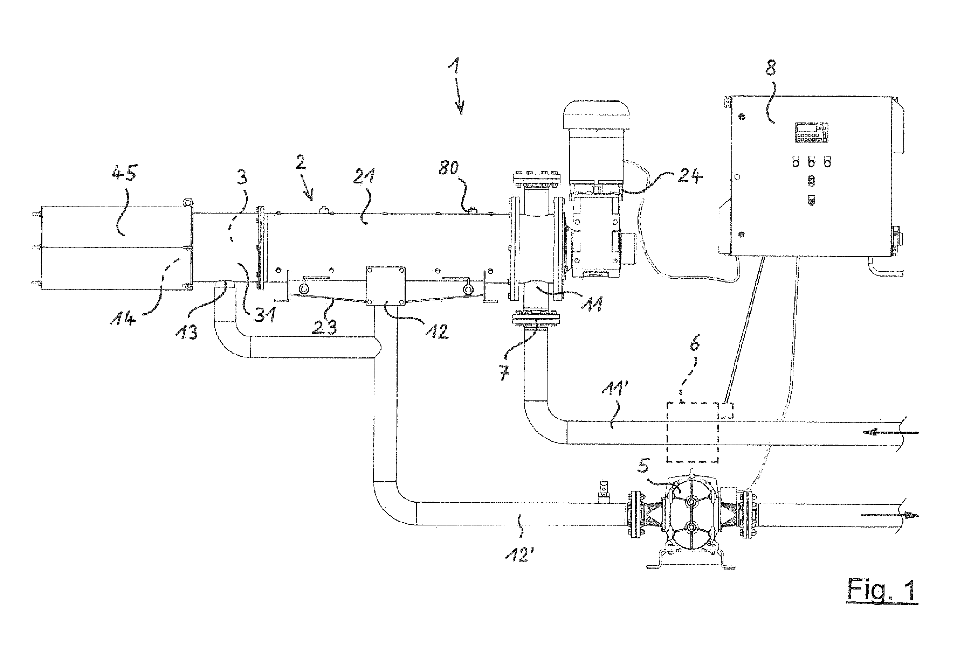

Die Figur 1 der Zeichnung zeigt eine Vorrichtung 1 zum Eindicken von flüssigem feststoffhaltigem Substrat, mit Zu- und Abführleitungen 11' und 12', einer Vakuumquelle 5 und einer Steuerung 8, in Ansicht.

Durch die Substratzuführleitung 11' ist einem Substrateinlass 11 der Vorrichtung 1 ein einzudickendes, aus Flüssigkeit und Feststoff bestehendes Substrat, wie z. B. Gülle aus einem Stall oder Gärreste aus einer Biogasanlage, zuführbar. An den Substrateinlass 11 schließt sich nach links hin ein Flüssigkeitsabscheider 2 an, von dem in der Figur 1 nur dessen äußerer Mantel 21 und ein an dessen Unterseite angeordneter Sammeltrichter 23 sichtbar sind. Innerhalb des Flüssigkeitsabscheiders 2 wird mittels eines Filterrohrs und einer Förderschnecke eine Trennung von Feststoff und Flüssigkeit vorgenommen. Die Flüssigkeit fließt durch den Sammeltrichter 23 zu einem dessen tiefsten Punkt bildenden Flüssigkeitsauslass 12, an welchen sich eine Flüssigkeitsabführleitung 12' anschließt.

In die Flüssigkeitsabführleitung 12' ist eine Vakuumquelle 5, hier in Form einer Drehkolbenpumpe, eingeschaltet. Im Betrieb der Vorrichtung 1 und der Drehkolbenpumpe sorgt letztere zum einen für ein Vakuum innerhalb der Vorrichtung 1, insbesondere für einen Differenzdruck zwischen der Außenseite und der Innenseite des Filterrohrs im Flüssigkeitsabscheider 2, und zum anderen für ein Abfördern der aus dem Substrat abgetrennten Flüssigkeit.

Damit sich das gewünschte Vakuum innerhalb der Vorrichtung 1 ausbildet, ist deren Substrateinlass 11 eine Drossel 7 zugeordnet oder vorgeschaltet. Im in Figur 1 dargestellten Ausführungsbeispiel ist die Drossel 7 z. B. einfach als Blende im Bereich eines Anschlussflansches des Substrateinlasses 11 angeordnet.

Alternativ zu der Blende 7 kann in die Substratzuführleitung 11' eine Fördereinrichtung 6 eingeschaltet sein, beispielsweise in Form einer zweiten Pumpe, die in der Figur 1 der Zeichnung gestrichelt angedeutet ist. In diesem Fall stehen die Vakuumquelle 5 und die Fördereinrichtung 6 jeweils mit der Steuereinheit 8 in Verbindung, welche die Leistung der Vakuumquelle 5 und der Fördereinrichtung 6 so regelt und aufeinander abgestimmt, dass sich das gewünschte Vakuum in der Vorrichtung 1 zwischen der Fördereinrichtung 6 und der Vakuumquelle 5 einstellt und im Betrieb der Vorrichtung 1 beibehalten wird. Zur Ermittlung des in der Vorrichtung 1 herrschenden Vakuums kann beispielsweise ein am Mantel 21 angebrachter Vakuumsensor 80 genutzt werden, der in nicht dargestellter Weise ebenfalls mit der Steuereinheit 8 verbunden ist und Messsignale für das im Inneren der Vorrichtung 1 herrschende Vakuum an die Steuereinheit 8 liefert.

Nach links schließt sich bei der Vorrichtung 1 nach Figur 1 an den Flüssigkeitsabscheider 2 ein Presskanal 3 an, in welchen der von der Flüssigkeit getrennte und vom Filterrohr zurückgehaltene Feststoff mittels der Förderschnecke, die sich bis in den Presskanal 3 erstreckt, hineinförderbar und zusammenpressbar ist. Dem Presskanal 3 ist ein eigener Mantel 31 zugeordnet, der dicht mit dem Mantel 21 des Flüssigkeitsabscheiders 2 verbunden ist. Innerhalb des Mantels 31 ist ein hier nicht sichtbares, die Förderschnecke umgebendes Siebrohr angeordnet, durch welches aus dem zusammengepressten Feststoff austretende Flüssigkeit hindurch in den Mantel 31 und zu dessen Flüssigkeitsauslass 13 fließen kann.

Das in Figur 1 linke Ende der Vorrichtung 1 wird durch einen Austragkasten 45 gebildet, in welchem sich hier verdeckt ein Feststoffauslass 14 befindet, der geöffnet und geschlossen werden kann und durch welchen im geöffneten Zustand Feststoff aus dem Presskanal 3 ausgegeben werden kann.

Am in der Figur 1 rechten Ende des Flüssigkeitsabscheiders 2 und des Substrateinlasses 11 ist ein Drehantrieb 24, hier gebildet aus einem Elektromotor und einem Getriebe, zum Antreiben der Förderschnecke im Inneren des Flüssigkeitsabscheiders 2 angeordnet. Auch der Drehantrieb 24 ist mit der Steuereinheit 8 verbunden, um die Antriebsleistung und/oder Drehzahl der Förderschnecke nach Bedarf einstellen und regeln zu können.

Im Betrieb der Vorrichtung 1 entsteht im Presskanal 3 ein Feststoffpfropfen, der den Feststoffauslass 14 luft- und flüssigkeitsdicht verschließt, jedoch einen Austrag von Feststoff erlaubt. Die Drossel 7 am Substrateinlass 11 oder die Fördereinrichtung 6 in der Substratzuführleitung 11' sorgt für eine Drosselung des Zuflussstroms des Substrats. Dadurch erzeugt die in die Flüssigkeitsabführleitung 12' eingeschaltete Vakuumquelle 5 in Form der Pumpe den gewollten Unterdruck, dessen Größe von der Steuereinheit 8 überwacht und geregelt wird.

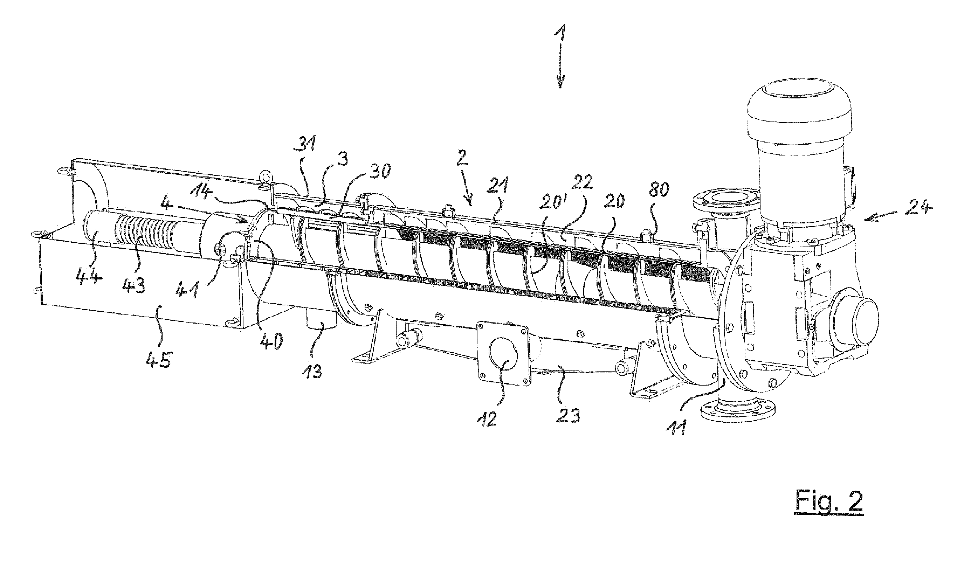

Die Figur 2 der Zeichnung zeigt die Vorrichtung 1 aus Figur 1 in einer teilweise aufgeschnittenen Darstellung, nun ohne die Leitungen 11' und 12', ohne die Vakuumquelle 5 und ohne die Steuereinheit 8.

Ganz rechts in Figur 2 ist an den Flüssigkeitsabscheider 2 der Drehantrieb 24 für die Förderschnecke 20' angeflanscht. Zwischen dem Mantel 21 des Flüssigkeitsabscheiders 2 einerseits und dem Drehantrieb 24 andererseits ist der Substrateinlass 11 angeordnet, an welchen die hier nicht gezeigte Substratzuführleitung 11' anzuschließen ist.

Nach links hin schließt sich an den Substrateinlass 11 das Filterrohr 20 an, in welchem die Förderschnecke 20' drehbar angeordnet ist. Um das Filterrohr 20 herum verläuft mit radialem Abstand der Mantel 21. Zwischen dem Außenumfang des Filterrohrs 20 und dem Innenumfang des Mantels 21 ist ein Flüssigkeitsraum 22 gebildet. Dieser Flüssigkeitsraum 22 nimmt die aus dem zugeführten Substrat mittels des Filterrohrs 20 abgeschiedene Flüssigkeit auf und führt sie einem an der Unterseite des Mantels 21 angeordneten Sammeltrichter 23 zu. An dem Sammeltrichter 23 ist in dessen tiefstem Bereich der Flüssigkeitsauslass 12 angeordnet, an den die hier nicht dargestellte Flüssigkeitsabführleitung 12' anschließbar ist.

Nach links hin folgt in Figur 2 auf den Flüssigkeitsabscheider 2 der Presskanal 3, in welchen sich die Förderschnecke 20' hinein erstreckt. Die Förderschnecke 20' ist hier von einem Siebrohr 30 umgeben, durch welches aus dem im Presskanal 3 zusammengepressten Feststoff austretende Flüssigkeit hindurchtritt und dann innerhalb des Mantels 31 dem zugehörigen Flüssigkeitsauslass 13 zugeführt wird.

An seinem äußeren, in Figur 2 linken Ende ist der Presskanal 3 mit einem Verschluss 4 versehen. Der Verschluss 4 hat hier die Form einer Verschlussscheibe 40, die in Axialrichtung verschiebbar und konzentrisch zur Förderschnecke 20' drehbar ist. Mittels einer Feder 43 ist die Verschlussscheibe 40 mit einer in Schließrichtung des Verschlusses 4 wirkenden axialen Kraft vorbelastet. Die Feder 43 ist mit ihrem einen Ende an der Verschlussscheibe 40 und mit ihrem anderen Ende an einer Federstütze 44 abgestützt. Durch axiales Verschieben der Federstütze 44 und Fixieren in einer passenden Stellung kann die auf die Verschlussscheibe 40 in Schließrichtung wirkende Federkraft bedarfsgerecht eingestellt werden.

In der Schließstellung des Verschlusses 4 liegt die Verschlussscheibe 40 dichtend am äußeren Stirnende des Presskanals 3 an und verschließt diesen. Dabei wird in Verbindung mit dem sich im Presskanal 3 im Betrieb der Vorrichtung 1 ausbildenden Feststoffpfropfen ein luft- und flüssigkeitsdichter Abschluss der Vorrichtung 1 erzielt. Gleichzeitig bleibt aber ein Austrag von Feststoff aus dem Feststoffpfropfen möglich. Dabei wird immer dann Feststoff ausgetragen, wenn der Feststoffpfropfen im Presskanal 3 auf die Verschlussscheibe 40 eine Kraft ausübt, welche die in Schließrichtung wirkende Kraft der Feder 43 übersteigt.

Die Verschlussscheibe 40 führt relativ zu dem Feststoffpfropfen im Presskanal 3 eine rotierende Bewegung aus, wodurch sie in Verbindung mit an der Verschlussscheibe 40 vorgesehenen Schneid- und/oder Schabewerkzeugen 41 den Feststoff auflockert und zerkleinert. In dieser zerkleinerten Form fällt der ausgetragene Feststoff dann durch den Austragkasten 45 nach unten und kann dort in einem Sammelbehälter aufgefangen oder mit einer weiterführenden Fördereinrichtung, wie Förderband, abtransportiert werden. Sobald die Kraft der Feder 43 die von dem Feststoffpfropfen auf die Verschlussscheibe 40 ausgeübte Kraft wieder übersteigt, bewegt sich die Verschlussscheibe 40 selbsttätig wieder in ihre Schließstellung.

Im Betrieb der Vorrichtung 1 wird, wie in Figur 1 dargestellt, mittels der Vakuumquelle 5 in Verbindung mit der Drossel 7 am Flüssigkeitsauslass 12 ein Vakuum erzeugt. Dies hat zur Folge, dass zwischen dem Inneren des Filterrohrs 20 und dem Flüssigkeitsraum 22 ein Differenzdruck entsteht und dass sich gewollt auf dem Innenumfang des Filterrohrs 20 ein teppichartiger Belag aus mit dem Substrat zugeführtem Feststoff aufbaut. Der teppichartige Belag aus Feststoff dient dann als gewollter Feinstfilter, in welchem sich feine Feststoffanteile, beispielsweise im Substrat zugeführte, in der abgetrennten Flüssigkeit aber nicht erwünschte Nährstoffe, wie Phosphor, absetzen.

Die Förderschnecke 20' ist mittels ihres mit der Steuereinheit 8 gekoppelten Drehantriebes 24 bevorzugt stufenlos regelbar, sodass, vakuumunterstützt, sich immer ein Filterteppich aus Feststoff in einer gewünschten Dicke auf den Innenumfang des Filterrohrs 20 auflegt. Die Förderschnecke 20' trägt den Belag immer wieder ab und fördert den gesättigten Feststoff in Richtung zum Presskanal 3 und zum Feststoffauslass 14.

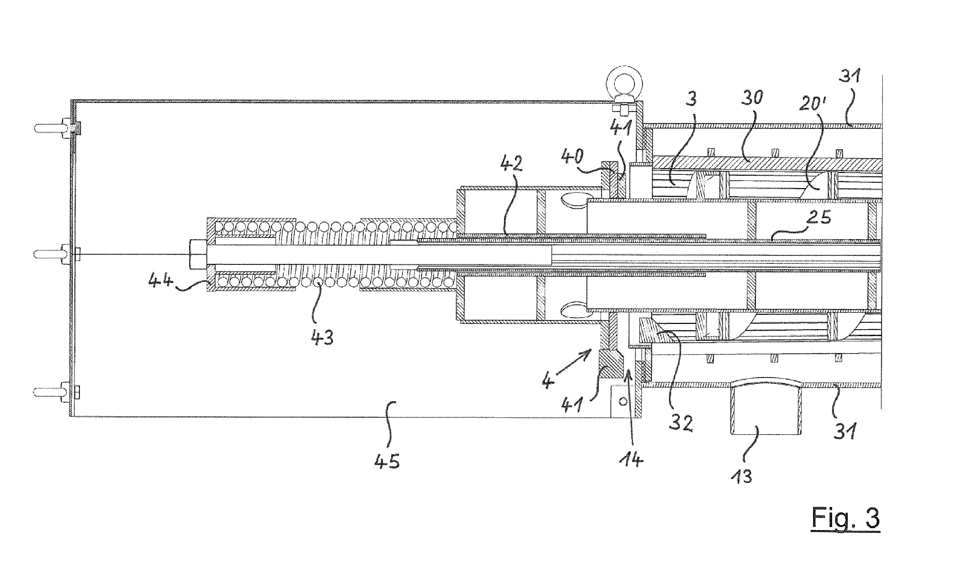

Figur 3 der Zeichnung zeigt in vergrößerter Darstellung den in Figur 2 linken Endbereich der Vorrichtung 1 mit deren Feststoffauslass 14 im Längsschnitt.

Rechts in Figur 3 ist noch ein Teil des Presskanals 3 mit dem Siebrohr 30, dem dieses umgebenden Mantel 31 und dem zugehörigen Flüssigkeitsauslass 13 sichtbar. Weiterhin ist dort erkennbar, dass sich die Förderschnecke 20' bis in das Siebrohr 30 hinein erstreckt.

An dem in Figur 3 linken Ende des Presskanals 3 liegt der Feststoffauslass 14, dem der Verschluss 4 in Form der Verschlussscheibe 40 zugeordnet ist. Die Verschlussscheibe 40 befindet sich hier in ihrer Öffnungsstellung, in der sie in Axialrichtung einen Abstand vom Stirnende des Presskanals 3 aufweist. Dieser axiale Abstand stellt sich ein, wenn von dem Feststoffpfropfen im Presskanal 3 auf die in Figur 3 nach rechts weisenden Seite der Verschlussscheibe 40 eine Kraft ausgeübt wird, die die Kraft der in entgegengesetzter Richtung wirkenden Feder 43 übersteigt.

Die Verschlussscheibe 40 ist nicht nur in Axialrichtung verschiebbar, sondern auch in ihrer Umfangsrichtung drehbar. Zu diesem Zweck ist die Verschlussscheibe 40 im dargestellten Ausführungsbeispiel mit einer zentralen, hohlen Welle 42 drehfest verbunden, welche axial verschiebbar, jedoch verdrehfest auf einem über das Ende des Presskanals 3 nach links hin vorstehenden Endbereich der Schneckenwelle 25 angeordnet ist.

Um zu vermeiden, dass der durch den Feststoffauslass 14 ausgebrachte Feststoff in unerwünscht großen Brocken anfällt, trägt die Verschlussscheibe 40 an ihrer dem Presskanals 3 zugewandten Seite sowie an ihrem Außenumfang Schneid- und Schabewerkzeuge 41. Diese Werkzeuge 41 lockern und zerkleinern den austretenden Feststoff, der dann in feinkrümeliger Form durch den nach unten hin offenen Austragkasten 45 aus diesem herausfällt. Damit die Werkzeuge 41 eine gute Wirkung entfalten, kann der Feststoffpfropfen im Presskanal 3 durch geeignete Führungsmittel 32 an einem Rotieren im Presskanal 3 gehindert werden.

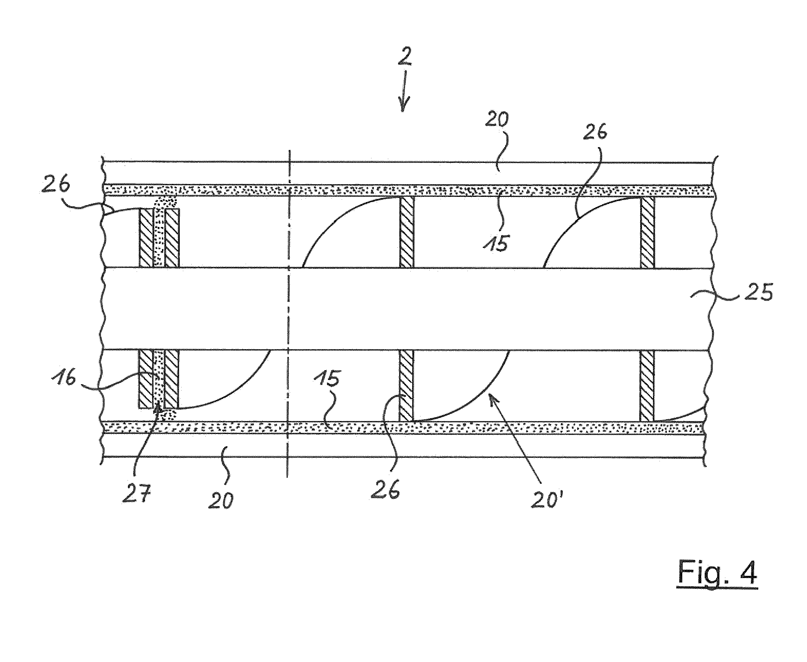

Figur 4 der Zeichnung zeigt einen Abschnitt der Förderschnecke 20' und des diese umgebenden Filterrohrs 20 im Längsschnitt. Den zentralen Teil der Förderschnecke 20' bildet deren Schneckenwelle 25, um die herum sich die Schneckenwendel 26 schraubenlinienförmig erstreckt. Die Schneckenwelle 25 und die Schneckenwendel 26 sind drehfest miteinander verbunden und beispielsweise als miteinander verschweißte Stahlbauteile ausgeführt.

Wie die Figur 4 deutlich zeigt, hat die Förderschnecke 20' einen Außendurchmesser, der kleiner ist als der Innendurchmesser des Filterrohrs 20. Dabei ist das Maß des Unterschiedes dieser beiden Durchmesser so groß gewählt, dass sich im Betrieb der Vorrichtung auf dem Innenumfang des Filterrohrs 20 ein Feststoffbelag 15 bildet, der eine Schichtdicke aufweist, die dem Durchmesserunterschied entspricht.

Da die Förderschnecke 20' einen Außendurchmesser hat, der kleiner als der Innendurchmesser des Filterrohrs 20 ist, kann die Förderschnecke 20' die Innenumfangsfläche des Filterrohrs 20 nicht erreichen, wodurch sich im Betrieb der Vorrichtung 1 infolge der Flüssigkeitsströmung radial von innen nach außen durch das Filterrohr 20 hindurch zwangsläufig der Feststoffbelag 15 auf der Innenumfangsfläche des Filterrohrs 20 aus dem im Substrat enthaltenen Feststoff bildet. Dieser Feststoffbelag 15 dient im Betrieb der Vorrichtung 1 als gewollter Filterbelag, der einen Filterkörper bildet, welcher insbesondere feine und feinste Feststoffteilchen aus dem Substrat zurückhält, die vom Filterrohr 20 allein nicht zurückgehalten würden. Bei z.B. einem Einsatz der Vorrichtung 1 zum Eindicken von Gülle aus Ställen oder Gärresten aus Biogasanlagen wird ein erheblicher Anteil an in der anfallenden flüssigen Phase unerwünschten Nährstoffen, insbesondere Phosphor bzw. Phosphate sowie Nitrate, in dem Filterbelag 15 zurückgehalten. Die Förderschnecke 20' trägt überschüssigen Belag ab, belässt aber immer eine gewünschte Belagschichtdicke auf dem Filterrohrinnenumfang.

Die Schneckenwendel 26 ist an ihrem Außenumfang zweckmäßig mit einer geschlossenen Oberfläche ausgebildet, um den Feststoffbelag 15 mit einer definierten Schichtdicke zu erzeugen und zu erhalten. Es besteht auch die Möglichkeit, die Schneckenwendel 26 an ihrem Außenumfang mit einer radial nach außen hin offenen Nut 27 auszubilden, in welcher sich im Betrieb der Vorrichtung 1 Feststoff, insbesondere in Form von Faserstoffen 16, sammelt und festsetzt. Diese Faserstoffe 16 ragen aus der Nut 27 über den Außenumfang der Schneckenwendel 26 vor und bilden eine Art Bürste, die bei Drehung der Förderschnecke 20' über den Innenumfang des Feststoffbelags 15 streicht, ohne jedoch bis zum Innenumfang des Filterrohrs 20 zu reichen. Hiermit kann ein weniger aggressiver Abtrag des Überschusses des Feststoffbelags 15 erzielt werden, was allerdings auf Kosten der Maßgenauigkeit der Schichtdicke des Feststoffbelags 15 geht. Um in diesem Fall einen zu weitgehenden Abtrag des Feststoffbelags 15 vom Innenumfang des Filterrohrs 20 zu vermeiden, wird zweckmäßig der Maßunterschied zwischen dem Außendurchmesser der Förderschnecke 20' und dem Innendurchmesser des Filterrohrs 20 größer gewählt als bei Einsatz einer Schneckenwendel 26 mit geschlossener Oberfläche an ihrem Außenumfang, beispielsweise verdoppelt.

Im Betrieb der Vorrichtung 1 kann ein Wachstum des Feststoffbelags 15 durch Veränderung der Drehzahl der Förderschnecke 20' beeinflusst werden, insbesondere durch Verkleinern der Drehzahl gefördert werden. Je kleiner die Drehzahl der Schnecke ist, umso länger ist die Verweilzeit des insbesondere durch Faserstoffe gebildeten Feststoffs und umso dicker ist der erzeugte Feststoffbelag. Dieser sich bildende Feststoffbelag dient als gewollte Filtermatte. Versuche und Messungen haben ergeben, dass sich in dieser Filtermatte ein erheblicher Anteil der im Substrat zugeführten Nährstoffe, insbesondere Phosphor, ansammelt und somit nicht mit der flüssigen Phase abgeführt wird.

Den abgetragenen, gesättigten Feststoff des überschüssigen Belages transportiert die Förderschnecke 20' in Richtung zum Feststoffauslass 14 in den zugeordneten Presskanal 3. Die vom Feststoff getrennte flüssige Phase weist dann nur noch einen wesentlich verminderten Gehalt an Nährstoffen auf und darf für Bewässerungszwecke verwendet oder in einen Vorfluter eingeleitet werden, ohne unzulässige Nährstoffbelastungen zu verursachen. Der in der Vorrichtung abgetrennte Feststoff mit den darin enthaltenen Nährstoffen stellt, bei Bedarf nach zusätzlicher Trocknung, einen transport- und lagerfähigen Dünger dar, der zu Zeiten und an Orten, zu bzw. an denen Düngebedarf besteht, auf landwirtschaftlichen Flächen ausgebracht werden kann.

**Bezugszeichenliste:**

| Zeichen | Bezeichnung |
|---|---|
| 1 | Vorrichtung |
| 11 | Substrateinlass |
| 11' | Substratzuführleitung |
| 12 | Flüssigkeitsauslass an 21 |
| 12' | Flüssigkeitsabführleitung |
| 13 | Flüssigkeitsauslass an 31 |
| 14 | Feststoffauslass |
| 15 | Feststoffbelag |
| 16 | Faserstoffe in 27 |
| | |
| 2 | Flüssigkeitsabscheider |
| 20 | Filterrohr |
| 20' | Förderschnecke in 2 |
| 21 | Mantel um 20 |
| 22 | Flüssigkeitsraum in 21 |
| 23 | Sammeltrichter |
| 24 | Drehantrieb von 20 |
| 25 | Schneckenwelle |
| 26 | Schneckenwendel |
| 27 | Nut in 26 |
| | |
| 3 | Presskanal |
| 30 | Siebrohr |
| 31 | Mantel um 30 |
| 32 | Führungsmittel |
| | |
| 4 | Verschluss |
| 40 | Verschlussscheibe |
| 41 | Schneid- und/oder Schabewerkzeug |
| 42 | Welle von 40 |
| 43 | Feder an 40 |
| 44 | Federstütze |
| 45 | Austragkasten |
| | |
| 5 | Vakuumquelle (erste Pumpe) |
| | |
| 6 | Fördereinrichtung (zweite Pumpe) |
| | |
| 7 | Drossel |
| | |
| 8 | Steuereinheit |
| 80 | Vakuumsensor(en) |

## Patentansprüche

1. Vorrichtung (1) zum Eindicken von flüssigem feststoffhaltigem Substrat, mit wenigstens einem flüssigkeitsdurchlässigen, Feststoff zurückhaltenden Filterrohr (20) und mit einer im Filterrohr (20) rotierbaren Förderschnecke (20'), mit einem in das Filterrohr (20) führenden Substrateinlass (11), mit einem außen vom Filterrohr (20) ausgehenden Flüssigkeitsauslass (12, 13) und mit einem Feststoffauslass (14), wobei auf einer inneren Oberfläche des Filterrohrs (20) Feststoff aus dem eingetragenen Substrat abscheidbar ist und wobei mittels der Förderschnecke (20') Feststoff zum Bilden eines Feststoffpfropfens in einen zwischen dem Filterrohr (20) und dem Feststoffauslass (14) angeordneten Presskanal (3) drückbar und aus dem Presskanal (3) durch den Feststoffauslass (14) austragbar ist,
**dadurch gekennzeichnet,**
**dass** die Förderschnecke (20') einen Außendurchmesser aufweist, der um ein das Ausbilden eines teppichartigen, einen Feinfilter bildenden Feststoffbelags (15) auf dem Innenumfang des Filterrohrs (20) erlaubendes Maß kleiner ist als der Innendurchmesser des Filterrohrs (20).

2. Vorrichtung nach Anspruch 1, **dadurch gekennzeichnet, dass** der Außendurchmesser der Förderschnecke (20') um 0,5 bis 5 mm, vorzugsweise um 1 bis 3 mm, kleiner als der Innendurchmesser des Filterrohrs (20) ist.

3. Vorrichtung nach Anspruch 1 oder 2, **dadurch gekennzeichnet, dass** an den Flüssigkeitsauslass (12) eine Vakuumquelle (5) angeschlossen oder anschließbar ist, mittels welcher zwischen dem Inneren des Filterrohrs (20) und dem Äußeren des Filterrohrs (20) eine Druckdifferenz mit von innen nach außen abfallendem Druck erzeugbar ist.

4. Vorrichtung nach Anspruch 3, **dadurch gekennzeichnet, dass** mittels der Vakuumquelle (5) im Filterrohr (20) ein Vakuum gegenüber der Umgebung erzeugbar ist.

5. Vorrichtung nach Anspruch 4, **dadurch gekennzeichnet, dass** dem Substrateinlass (11) eine Drossel (7) zugeordnet oder vorgeschaltet ist.

6. Vorrichtung nach einem der Ansprüche 1 bis 5, **dadurch gekennzeichnet, dass** das Filterrohr (20) radial außen mit Abstand von einem dichten Mantel (21) umgeben ist, dass zwischen dem Filterrohr (20) und dem Mantel (21) ein Flüssigkeitsraum (22) gebildet ist und dass der Mantel (21) in seinem im Betrieb der Vorrichtung (1) untersten Bereich den Flüssigkeitsauslass (12) aufweist.

7. Vorrichtung nach einem der Ansprüche 3 bis 5, **dadurch gekennzeichnet, dass** die Vakuumquelle (5) eine Flüssigkeitspumpe ist, deren Saugseite mit dem Flüssigkeitsauslass (12) verbunden oder verbindbar ist.

8. Vorrichtung nach Anspruch 7, **dadurch gekennzeichnet, dass** an den Flüssigkeitsauslass (12) eine die Flüssigkeit abführende Flüssigkeitsabführleitung (12') angeschlossen ist und dass die als Vakuumquelle (5) dienende Flüssigkeitspumpe in die Flüssigkeitsabführleitung (12') eingefügt ist.

9. Vorrichtung nach Anspruch 5, **dadurch gekennzeichnet, dass** die Drossel (7) durch eine feste oder veränderbare Querschnittsverengung des Substrateinlasses (11) oder durch eine feste oder veränderbare Querschnittsverengung einer dem Substrateinlass (11) vorgeschalteten Substratzuführleitung (11') gebildet ist.

10. Vorrichtung nach Anspruch 5, **dadurch gekennzeichnet, dass** die Drossel (7) durch eine im Substrateinlass (11) oder in einer diesem vorgeschalteten Substratzuführleitung (11') angeordnete Fördereinrichtung (6) gebildet ist, deren Leistung im Verhältnis zu der Leistung der Vakuumquelle (5) so steuerbar ist, dass zwischen dem Inneren des Filterrohrs (20) und dem Äußeren des Filterrohrs (20) die Druckdifferenz in einer gewünschten Größe entsteht.

11. Vorrichtung nach einem der Ansprüche 1 bis 10, **dadurch gekennzeichnet, dass** die Förderschnecke (20') eine Schneckenwelle (25) aufweist, die am einlassseitigen Ende der Förderschnecke (20') dichtend aus dem Filterrohr (20) herausgeführt und mit einem drehzahlvariablen motorischen Drehantrieb (24) verbunden ist.

12. Vorrichtung nach einem der Ansprüche 1 bis 11, **dadurch gekennzeichnet, dass** der Feststoffauslass (14) mittels eines bewegbaren Verschlusses (4) verschließbar und zum Austrag von Feststoff freigebbar ist.

13. Vorrichtung nach Anspruch 12, **dadurch gekennzeichnet, dass** der Verschluss (4) am Feststoffauslass (14) durch eine axial zwischen einer Schließstellung und einer Öffnungsstellung verschiebbar gelagerte, mit einer in Schließrichtung wirkenden Kraft vorbelastete Verschlussscheibe (40) gebildet ist.

14. Vorrichtung nach Anspruch 13, **dadurch gekennzeichnet, dass** der Verschluss (4) mittels mechanischer Kopplung mit der Förderschnecke (20') oder mittels eines eigenen Drehantriebes drehantreibbar ist.

15. Vorrichtung nach Anspruch 14, **dadurch gekennzeichnet, dass** der Verschluss (4) an seiner dem Feststoffauslass (14) zugewandten Seite mindestens ein Schneid- und/oder Schabewerkzeug (41) zum Lösen und Zerkleinern von durch den Feststoffauslass (14) aus dem Feststoffpfropfen ausgetragenem Feststoff aufweist.

16. Vorrichtung nach Anspruch 12, **dadurch gekennzeichnet, dass** der Verschluss (4) am Feststoffauslass (14) durch eine Drehkolbenpumpe gebildet ist.

17. Vorrichtung nach einem der Ansprüche 1 bis 16, **dadurch gekennzeichnet, dass** der Presskanal (3) im Inneren eines eine Fortsetzung des Filterrohrs (20) bildenden, umfangsseitig geschlossenen oder siebartig ausgebildeten Rohrabschnitts (30) ausgebildet ist.

18. Vorrichtung nach Anspruch 17, **dadurch gekennzeichnet, dass** der Rohrabschnitt (30) bei einer Ausbildung als Siebrohr von einem eigenen, zweiten Mantel (31) dicht umgeben ist und einen eigenen, zweiten Flüssigkeitsauslass (13) aufweist.

19. Verfahren zum Eindicken von flüssigem feststoffhaltigem Substrat, insbesondere zum Betreiben einer Vorrichtung (1) nach einem der vorhergehenden Ansprüche, wobei das Substrat in wenigstens ein flüssigkeitsdurchlässiges, Feststoff zurückhaltendes Filterrohr (20) mit einer im Filterrohr (20) rotierbaren Förderschnecke (20') geführt wird, wobei auf einer inneren Oberfläche des Filterrohrs (20) Feststoff aus dem eingetragenen Substrat abgeschieden wird und wobei mittels der Förderschnecke (20') Feststoff zum Bilden eines Feststoffpfropfens in einen zwischen dem Filterrohr (20) und einem Feststoffauslass (14) angeordneten Presskanal (3) gedrückt und aus dem Presskanal (3) durch den Feststoffauslass (14) ausgetragen wird,
**dadurch gekennzeichnet,**
**dass** auf dem Innenumfang des Filterrohrs (20) ein teppichartiger, einen hohlzylindrischen Feinfilter bildender Feststoffbelag (15) erzeugt wird, indem eine Förderschnecke (20') mit einem Außendurchmesser eingesetzt wird, der um ein das Ausbilden des teppichartigen Feststoffbelags (15) erlaubendes Maß kleiner ist als der Innendurchmesser des Filterrohrs (20).

20. Verfahren nach Anspruch 19, **dadurch gekennzeichnet, dass** der teppichartige Feststoffbelag (15) auf dem Innenumfang des Filterrohrs (20) mit einer Schichtdicke von 0,5 bis 5 mm, vorzugsweise von 1 bis 3 mm, erzeugt wird.

21. Verfahren nach Anspruch 19 oder 20, **dadurch gekennzeichnet, dass** mittels einer an den Flüssigkeitsauslass (12) angeschlossenen oder anschließbaren Vakuumquelle (5) zwischen dem Inneren des Filterrohrs (20) und dem Äußeren des Filterrohrs (20) eine Druckdifferenz mit von innen nach außen abfallendem Druck erzeugt wird.

22. Verfahren nach Anspruch 21, **dadurch gekennzeichnet, dass** mittels der Vakuumquelle (5) im Filterrohr (20) ein Vakuum gegenüber der Umgebung erzeugt wird.

23. Verfahren nach Anspruch 22, **dadurch gekennzeichnet, dass** im oder vor dem Substrateinlass (11) die Substratströmung gedrosselt wird.

24. Verfahren nach einem der Ansprüche 21 bis 23, **dadurch gekennzeichnet, dass** die Druckdifferenz oder die Druckdifferenz und das Vakuum mittels einer als Vakuumquelle (5) dienenden Flüssigkeitspumpe erzeugt wird/werden, deren Saugseite mit dem Flüssigkeitsauslass (12) verbunden oder verbindbar ist.

25. Verfahren nach einem der Ansprüche 21 bis 24, **dadurch gekennzeichnet, dass** das Substrat mittels des im Filterrohr (20) von der Vakuumquelle (5) gegenüber der Umgebung erzeugten Vakuums durch den Substrateinlass (11) in das Filterrohr (20) gefördert wird.

26. Verfahren nach einem der Ansprüche 21 bis 25, **dadurch gekennzeichnet, dass** das Substrat dem Substrateinlass (11) mittels einer diesem vorgeschalteten Fördereinrichtung (6) zugeführt wird und dass die Fördereinrichtung (6) und die Vakuumquelle (5) so aufeinander abgestimmt werden, dass im Betrieb der Vorrichtung (1) zwischen dem Inneren des Filterrohrs (20) und dem Äußeren des Filterrohrs (20) die Druckdifferenz in einer gewünschten Größe erzeugt wird.
